# EUROPEAN PATENT SPECIFICATION

(11) **EP 1 798 169 B1**
(45) Date of publication and mention of the grant of the patent: **15.12.2010**
(21) Application number: 06110090.5
(22) Date of filing: 17.02.2006
(51) Int. Cl.: B65G 63/00

(54) **A low frame bridge type system with carriers for transferring containers between a shore side crane and a stacking area crane**
System mit einem niedrigen Brückengestell und Trägern zum Umsetzen von Containern zwischen einem seeseitigen Kran und einem Kran eines Containerlagers
Système à pont surbaissé avec des chariots pour le transfert de containers entre une grue côté quai et une grue de stockage

(30) Priority: 14.12.2005 CN 200510111464
(43) Date of publication of application: 20.06.2007
(73) Proprietor: Shanghai Zhenhua Port Machinery Co. Ltd., Shanghai District, Shanghai 200125 (CN)
(72) Inventor: Tian, Hong, 200125 Shanghai (CN)
(74) Representative: Modiano, Micaela Nadia

(56) References cited:
- EP-A- 0 302 569
- EP-A- 1 293 469
- EP-A- 1 795 467
- EP-A- 1 847 492
- DE-A1-102006 035 732
- GB-A- 2 065 076
- JP-A- 1 043 493
- NL-A- 7 711 093
- US-A1- 2003 108 405

## Description

### Field of Invention

The present disclosure relates to loading and unloading technique of a container terminal, more particularly, relates to a low elevated carrier transportation system between quayside crane and yard crane.

### Background

Between quayside cranes and yard cranes of a container terminal, containers need to be transferred. Tremendous quantities of containers to be transported by ships are transferred from the yard onto container transportation ships, or tremendous quantities of containers carried thereto by the container transportation ships are transferred from the container transportation ships onto the yard. According to prior art, the operation is carried out by ground transportation vehicles (container trucks or AGVs or cross-transportation cars) driven by combustion engines. When the ground transportation vehicles travel, cross interference among several transportation cars is easy to occur. The distance of transportation is too wide as well. Therefore the transportation efficiency is affected. In order to increase the load and unload efficiency, the amount of the transportation vehicles needs to be increased, however, the more the transportation vehicles are, the larger the possibility of cross interference will be. Hence, it is impossible to increase the load and unload efficiency by virtue of increasing the amount of the transportation vehicles. It is eager to develop a high efficient container load and unload system in order to meet the requirements of load and unload productivity by the large scale and the high speed automation of the container transportation.

Storage and trans-shipment systems for container terminals are disclosed in documents GB-2065076 and EP 0 302 569.

GB-2 065 076 discloses a trans-shipment system according to the preamble of claim 1.

### Summary

According to the present invention, a high efficient low elevated carrier transportation system between quayside crane and yard crane so as to meet the requirements of load and unload productivity by the large scale and the high speed automation of the container transportation, is provided that has the features set forth in claim 1.

According to an embodiment, the length of the low frame bridge is corresponding to the dimension of the stacking area of the yard.

According to an embodiment, a platform on the ground plane carrier can rotate with 90 degrees.

According to an embodiment, one low frame bridge is included.

According to an embodiment, four low frame bridges are included and arranged tightly in parallel.

According to an embodiment, three low frame bridges are included and arranged tightly in parallel.

According to an embodiment, two low frame bridges are included and arranged tightly in parallel.

By using low elevated carrier transportation system between quayside crane and yard crane according to the present disclosure, load and unload efficiency of the container terminal is increased significantly, a semi-automatic or full-automatic container terminal can be realized. Difficulty and cost of constructing an automatic container terminal are decreased significantly. The system of the present disclosure can be applied to a non-automatic container terminal, or an automatic container terminal.

### Brief description of Drawings

Figure 1 is a schematic front view of a low elevated carrier transportation system between quayside crane and yard crane according to an embodiment of the present disclosure;
Figure 2 is the top view of the figure 1;
Figure 3 is the side view of the figure 1; and
Figure 4 is the schematic structure view of the low frame bridge according to an embodiment of the present disclosure.

### Detailed description of preferred embodiments

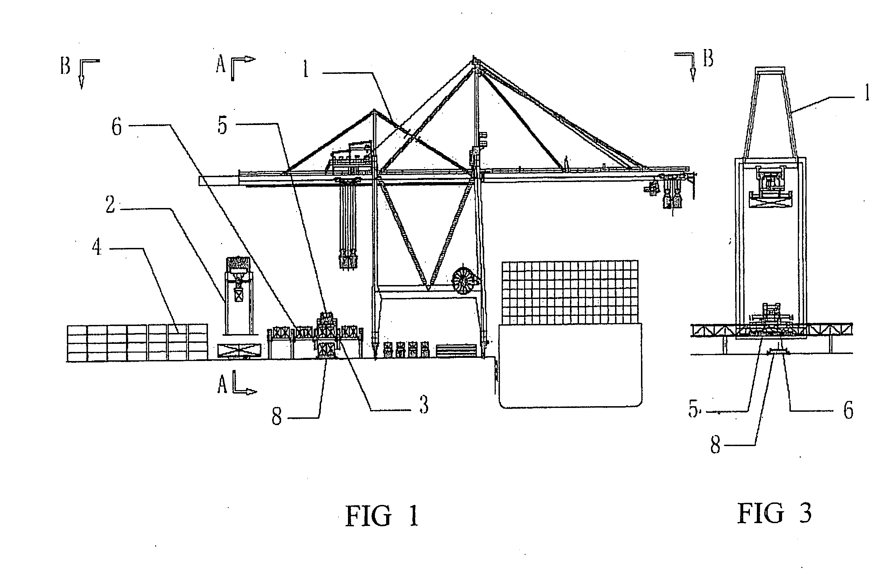

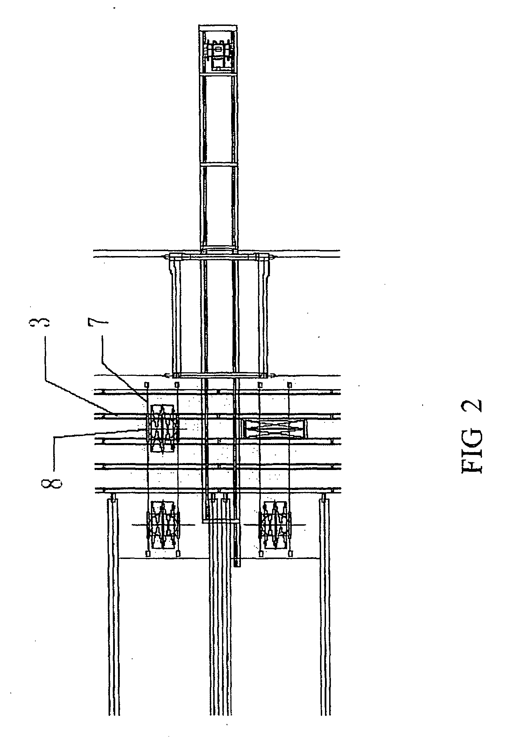

Referring to figures 1, 2 and 3, a low elevated carrier transportation system between quayside crane and yard crane according to an embodiment of the present disclosure is shown. The system includes a low frame bridge 3 which is disposed under a rear extension portion of a quayside crane and parallel to a large carrier rail of the quayside crane. The length of the low frame bride 3 is corresponding to the dimension of the stacking area of the yard and the width of the low frame bridge is matched to the width of a carrier. The amount of the low frame bridges 3 may be one, two, three, four or even more, Four low frame bridges are shown in this embodiment. When the amount of the low frame bridges is more than one, the low frame bridges are arranged tightly in parallel.

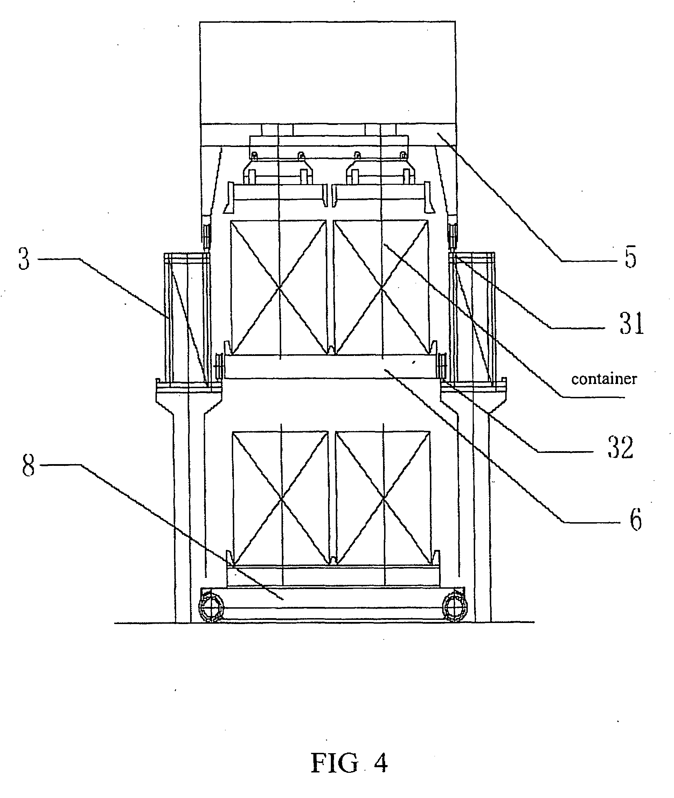

Referring to figures 4 and 1, a set of rails 31 extends in the length direction of the low frame bridge and is disposed at a top part of each low frame bridge 3. A set of rails 32 extends in the length direction of the low frame budge and is disposed at the middle part of the low frame bridge. The two rails 31 and 32 are arranged in parallel. A low frame bridge crane carrier 5 is disposed on the top rail 31 and travels along the top rail 31, and a low frame bridge plane carrier 6 is disposed on the middle rail 32 and travels along the middle rail 32. When the low frame crane carrier 5 travels on the top rail 31, the travel of the low frame bridge plane carrier 6, with a container, on the middle rail is not affected, that is, the low frame crane carrier 5 and the low frame bridge plane carrier 6 travel across each other, either with a container or without a container. Ground rails 7 are disposed under the low frame bridge 3. Each ground rail 7 corresponds to each stacking area and is perpendicular to the length direction of the low frame bridge. The ground rails 7 extend to the load and unload area at the sea side end part of the stacking area of the yard 4. A ground plane carrier 8 is disposed on each ground rail 7 respectively and travels along the ground rail 7. A platform on the ground plane carrier 8 may rotate 90 degrees. Therefore, the container carried on the platform may be rotated 90 degrees in the rotation operation.

The operation of the low elevated carrier transportation system between quayside crane and yard crane according to an embodiment of the present disclosure is described here below in conjunction with figure 1.

When unloading containers from the ship, the containers are transferred by the quayside crane from the ship onto the low frame bridge plane carrier, then the low frame bridge plane carrier travels to a load and unload position and the containers are lifted and placed by the low frame bridge crane carrier above the low frame bridge plane carrier onto a designated ground plane carrier, then the ground plane carrier travels to a load and unload area of an end part of the yard after receiving the containers, at same time the containers are turned around 90 degrees on the ground plane carrier, finally the containers are transferred onto the stacking area of the yard by the yard crane.

When loading containers onto the ship, the containers are transferred from the stacking area of the yard onto the ground plane carrier by the yard crane, then the ground plane carrier travels to an area under the low frame bridge after receiving containers, at same time the containers are turned around 90 degrees on the ground plane carrier, after arriving the area under the low frame bridge, the containers are lifted and placed onto the low frame bridge plane carrier by the low frame bridge crane carrier, then the low frame bridge plane carrier travels to the load and unload position, finally the containers are lifted and placed from the low frame bridge plane carrier onto ship by the quayside crane.

The low elevated carrier transportation system between quayside crane and yard crane according to an embodiment of the present disclosure avoids the usage of traditional ground transportation vehicles driven by combustion engines in the container terminal, and uses the low frame bridge and carriers disposed at upper and lower positions on the low frame bridge, as well as matched ground carriers. The embodiments of the present disclosure solve the problem of horizontal cross interference when the containers are transported between the quayside crane and the yard crane. The embodiments of the present disclosure significantly increase the load and unload efficiency between the quayside crane and the yard crane, and provide a rapid transportation schema between the quayside crane and the yard crane. The system has very large economical benefit and social benefit.

## Claims

1. A low elevated carrier transportation system for transferring loads between a quayside crane (1) arranged at a load and unload area at sea side and a yard crane (2), wherein the system comprises:
at least one low frame bridge (3) arranged under a rear extension portion of a quayside crane (1) and parallel to a large carrier rail of the quayside crane (1);
at least one set of rails (31, 32) extending along the length direction of the low frame bridge (3), and disposed at the top or middle parts of each low frame bridge(3) respectively;
a low frame bridge crane carrier (5) and a low frame bridge plane carrier (6) disposed on a middle part rail (32) and travelling along the middle part rail (32), the low frame bridge crane carrier (5) and the low frame bridge plane carrier (6) travelling across each other;
**characterized in that**
the low frame bridge crane carrier (5) is and disposed on a top part rail (31) and travels along the top part rail (31) , the system further comprising:
ground rails (7) perpendicular to a length direction of the low frame bridge (3), disposed under the low frame bridge (3) at a position corresponding to each stacking area (4), the ground rails (7) extending to the load and unload area at the sea side end part of the stacking area of the yard; and
a ground plane carrier (8) disposed on the ground rails (7) and travelling along these rails (7).

2. The system of claim 1, wherein the length of the low frame bridge (3) is corresponding to the dimension of the stacking area (4) of the yard.

3. The system of claim 1, wherein a platform on the ground plane carrier (8) is rotatable with 90 degrees.

4. The system of claim 1, wherein one low frame bridge (3) is included.

5. The system of claim 1, wherein four low frame bridges (3) are included and arranged tightly in parallel.

6. The system of claim 1, wherein three low frame bridges (3) are included and arranged tightly in parallel.

7. The system of claim 1, wherein two low frame bridges (3) are included and arranged tightly in parallel.

## Patentansprüche

1. Ein niedriges erhöhtes Träger-Transportsystem zum Umsetzen von Lasten zwischen einem Kran (1) auf der Kaiseite, der in einem Lade- und Ausladebereich auf der Seeseite positioniert ist, und einen Lagerplatz-Kran (2), wobei das System Folgendes umfasst:
mindestens eine Brücke (3) mit niedrigem Gestell, die unter einem hinteren Verlängerungsabschnitt eines Krans (1) auf der Kaiseite und parallel zu einer großen Tragschiene des Krans (1) auf der Kaiseite angeordnet ist,
mindestens einen Satz von Schienen (31, 32), die sich entlang der Längenrichtung der Brücke (3) mit niedrigem Gestell erstrecken und an den oberen beziehungsweise mittleren Teilen jeder Brücke (3) mit niedrigem Gestell angeordnet sind,
einen Kranträger (5) der Brücke mit niedrigem Gestell und einen ebenen Träger (6) der Brücke mit niedrigem Gestell, der auf einer Schiene (32) des mittleren Teils angeordnet ist und der sich entlang der Schiene (32) des mittleren Teils bewegt, wobei der Kranträger (5) der Brücke mit niedrigem Gestell und der ebene Träger (6) der Brücke mit niedrigem Gestell sich übereinander bewegen,
**dadurch gekennzeichnet, dass** der Kranträger (5) der Brücke mit niedrigem Gestell auf einer Schiene (31) des oberen Teils angeordnet ist und sich entlang der Schiene (31) des oberen Teils bewegt, wobei das System weiterhin folgendes umfasst
Bodenschienen (7), die senkrecht zu einer Längsrichtung der Brücke (3) mit niedrigem Gestell sind, die unter der Brücke (3) mit niedrigem Gestell in einer Position angeordnet sind, die jedem Stapelbereich (4) entspricht, wobei sich die Bodenschienen (7) zum Lade- und Ausladebereich am seeseitigen Endteil des Stapelbereichs des Lagerplatzes erstrecken, und
einen ebenen Boden-Träger (8), der auf den Bodenschienen (7) angebracht ist und sich entlang diesen Schienen (7) bewegt.

2. Das System gemäß Anspruch 1, worin die Länge der Brücke (3) mit niedrigem Gestell der Größe des Stapelbereichs (4) des Lagerplatzes entspricht.

3. Das System gemäß Anspruch 1, worin eine Plattform auf dem ebenen Boden-Träger (8) um 90 Grad drehbar ist.

4. Das System gemäß Anspruch 1, worin eine Brücke (3) mit niedrigem Gestell eingeschlossen ist.

5. Das System gemäß Anspruch 1, worin vier Brücken (3) mit niedrigen Gestellen eingeschlossen und eng parallel angeordnet sind.

6. Das System gemäß Anspruch 1, worin drei Brücken (3) mit niedrigen Gestellen eingeschlossen und eng parallel angeordnet sind.

7. Das System gemäß Anspruch 1, worin zwei Brücken (3) mit niedrigen Gestellen eingeschlossen und eng parallel angeordnet sind.

## Revendications

1. Système de transport à chariots surbaissas, pour le transfert de charges entre une grue côté quai (1), agencée à une zone de chargement et de déchargement, du côté mer, et une grue côté parc de stockage (2), dans lequel le système comprend :
au moins un pont surbaissé (3), agencé sous une partie d'extension arrière d'une grue côté quai (1) et parallèlement à un grand rail pour chariot de la grue côté quai (1) ;
au moins un jeu de rails (31, 32), s'étendant dans la direction longitudinale du pont surbaissé (3) et disposé en des parties supérieures ou médianes de chaque pont surbaissé (3), respectivement ;
un chariot de grue de pont surbaissé (5) et un chariot pour plan de pont surbaissé (6), disposé sur un rail de partie médiane (32) et se déplaçant le long du rail de partie médiane (32), le chariot de grue de pont surbaissé (5) et le chariot pour plan de pont surbaissé (6) se déplaçant l'un par rapport à l'autre,
**caractérisé en ce que**
le chariot de grue de pont surbaissé (5) est disposé sur un rail de partie supérieure (31) et se déplace le long du rail de partie supérieure (31), le système comprenant en outre :
des rails de sol (7), perpendiculaires à une direction longitudinale du pont surbaissé (3), disposés sous le pont surbaissé (3) en une position correspondant à chaque zone d'empilement (4), les rails de sol (7) s'étendant à la zone de chargement et de déchargement, à la partie d'extrémité de côté mer de la zone d'empilement du parc de stockage ; et
un chariot de plan de sol (8), disposé sur les rails de sol (7) et se déplaçant le long de ces rails (7).

2. Système selon la revendication 1, dans lequel la longueur du pont surbaissé (3) correspond à la dimension de la zone d'empilement (4) du parc de stockage,

3. Système selon la revendication 1, dans lequel une plateforme, sur le chariot de plan de sol (8), est susceptible de tourner de 90 degrés.

4. Système selon la revendication 1, dans lequel un pont surbaissé (3) est inclus.

5. Système selon la revendication 1, dans lequel quatre ponts surbaissés (3) sont inclus et agencés de manière étroitement près en parallèle.

6. Système selon la revendication 1, dans lequel trois ponts surbaissés (3) sont inclus et agencés de manière étroitement près en parallèle.

7. Système selon la revendication 1, dans lequel deux ponts surbaissés (3) sont inclus et agencés de manière étroitement près en parallèle.
